# EUROPEAN PATENT APPLICATION

(11) **EP 2 782 219 A2**
(43) Date of publication of application: **24.09.2014**
(21) Application number: 14159088.5
(22) Date of filing: 12.03.2014
(51) Int. Cl.: H02K 3/50, H02K 15/06

(54) **A wound component, a coil, a rotating electrical machine and manufacturing method of such a coil**

(30) Priority: 19.03.2013 JP 2013056293
(71) Applicant: Kabushiki Kaisha Yaskawa Denki, Kitakyushu-shi, Fukuoka 806-0004 (JP)
(72) Inventor: TOMOHARA, Kenji, Kitakyushu-shi, Fukuoka 806-0004 (JP); MAEMURA, Akihiko, Kitakyushu-shi, Fukuoka 806-0004 (JP); INOUE, Takeshi, Kitakyushu-shi, Fukuoka 806-0004 (JP); ADACHI, Norimasa, Kitakyushu-shi, Fukuoka 806-0004 (JP); YASUKAWA, Junichi, Kitakyushu-shi, Fukuoka 806-0004 (JP)
(74) Representative: Viering, Jentschura & Partner Patent- und Rechtsanwälte

(57) **Abstract**

A wound coil component (130) being a semi-finished coil (30) able to be wound around a slot (11) of a stator core (1a). The wound component (130) includes: - a first side (131) foreseen to be disposed at one end side of the coil which will be disposed at the inner peripheral side of the stator core; - a second side (132) opposite to the first side and foreseen to be disposed at the opposite side of the coil which will be disposed at the outer peripheral side of the stator core; - a third side (133) and - a fourth side (134) that couple the first side (131) with the second side (132) on their respective ends. The first side (131) has a length shorter than that of the second side (132).

## Description

### CROSS-REFERENCE TO RELATED APPLICATION

This application claims priority from Japanese Patent Application No. 2013-056293 filed with the Japan Patent Office on March 19, 2013, the entire content of which is hereby incorporated by reference.

### BACKGROUND

### 1. Technical Field

This disclosure relates to a wound member for manufacturing a coil, a coil, a rotating electrical machine, and a method for manufacturing a coil.

### 2. Related Art

Conventionally, there is known a rotating electrical machine with coils wound around slots of a stator (for example, see JP-A-2009-189078). In the publication, winding a wire rod around a spool with an approximately rectangular cross section forms an approximately rectangular coil (a wound member for manufacturing a coil). Afterwards, bending the approximately rectangular coil to an inner peripheral side or an outer peripheral side of a stator forms the coil.

Generally, when the coil is bent to the inner peripheral side of the stator, a length of a coil end bent to the inner peripheral side in a circumferential direction becomes shorter than a length of the coil end not bent to the inner peripheral side and disposed at the outer peripheral side in the circumferential direction. However, in JP-A-2009-189078, the rotating electrical machine includes approximately rectangular coils (wound members for manufacturing a coil). That is, two sides configuring coil ends have approximately equal length. In view of this, it is difficult to make the length of the coil end bent to the inner peripheral side in the circumferential direction shorter than the length of the coil end disposed at the outer peripheral side in the circumferential direction. That is, forming a coil bent to the inner peripheral side is difficult. Alternatively, even in the same bending direction, both coil ends form symmetrical shapes.

One purpose of this disclosure is to provide a wound member for manufacturing a coil, a coil, a rotating electrical machine, and a method for manufacturing a coil that ensure easily forming coils bent to the inner peripheral side and forming asymmetric coils of different bending directions.

### SUMMARY

A wound member for manufacturing a coil is a wound member for manufacturing a coil for manufacturing a coil wound around a slot of a stator core. The wound member for manufacturing a coil includes: a first side to be an end side at one side of a coil end disposed at an inner peripheral side of the stator core; a second side disposed opposite to the first side, the second side being to be an end side at another side of a coil end disposed at an outer peripheral side of the stator core; and a third side and a fourth side that respectively couple the first side and the second side. The first side has a length shorter than a length of the second side.

### BRIEF DESCRIPTION OF DRAWINGS

Fig. 1 is a perspective view schematically illustrating an overall configuration of an electric motor of a first embodiment;
Fig. 2 is a perspective view illustrating a U-phase coil of the electric motor of the first embodiment;
Fig. 3 is a perspective view illustrating a V-phase coil of the electric motor of the first embodiment;
Fig. 4 is a perspective view illustrating a W-phase coil of the electric motor of the first embodiment;
Fig. 5 is a pattern diagram illustrating an arrangement of the coils where a stator of the electric motor illustrated in Fig. 1 is planarly expanded and viewed from outside in a radial direction;
Fig. 6 is a pattern diagram for describing the structure of the coils in each phase of the electric motor illustrated in Fig. 1;
Fig. 7 is a front view of a wound member for manufacturing a coil for manufacturing the U-phase coil of the electric motor of the first embodiment;
Fig. 8 is a side view of the wound member for manufacturing a coil for manufacturing the U-phase coil of the electric motor of the first embodiment;
Fig. 9 is a front view of a wound member for manufacturing a coil for manufacturing the V-phase coil of the electric motor of the first embodiment;
Fig. 10 is a side view of the wound member for manufacturing a coil for manufacturing the V-phase coil of the electric motor of the first embodiment;
Fig. 11 is a front view of a wound member for manufacturing a coil for manufacturing the W-phase coil of the electric motor of the first embodiment;
Fig. 12 is a side view of the wound member for manufacturing a coil for manufacturing the W-phase coil of the electric motor of the first embodiment;
Fig. 13 is a perspective view illustrating the wound member for manufacturing a coil for manufacturing the U-phase coil bent to the inner peripheral side of the electric motor of the first embodiment;
Fig. 14 is a perspective view illustrating the wound member for manufacturing a coil for manufacturing the U-phase coil bent to the outer peripheral side of the electric motor of the first embodiment;
Fig. 15 is a perspective view illustrating the wound member for manufacturing a coil for manufacturing the V-phase coil bent to the inner peripheral side of the electric motor of the first embodiment;
Fig. 16 is a perspective view illustrating the wound member for manufacturing a coil for manufacturing the W-phase coil bent once to the outer peripheral side of the electric motor of the first embodiment;
Fig. 17 is a perspective view illustrating the wound member for manufacturing a coil for manufacturing the W-phase coil bent twice to the outer peripheral side of the electric motor of the first embodiment;
Fig. 18 is a perspective view illustrating the wound member for manufacturing a coil for manufacturing the W-phase coil bent twice to the inner peripheral side of the electric motor of the first embodiment;
Fig. 19 is a pattern diagram illustrating an electric motor of a second embodiment;
Fig. 20 is a block diagram for illustrating the electric motor of the second embodiment; and
Fig. 21 is a side view of the wound member for manufacturing a coil for manufacturing a coil of the electric motor of the second embodiment.

### DETAILED DESCRIPTION

In the following detailed description, for purpose of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

A wound member for manufacturing a coil according to a first aspect is a wound member for manufacturing a coil for manufacturing a coil wound around a slot of a stator core. The wound member for manufacturing a coil includes: a first side to be an end side at one side of a coil end disposed at an inner peripheral side of the stator core; a second side disposed opposite to the first side, the second side being to be an end side at another side of a coil end disposed at an outer peripheral side of the stator core; and a third side and a fourth side that respectively couple the first side and the second side. The first side has a length shorter than a length of the second side.

In a wound member for manufacturing a coil according to the first aspect, as described above, the length of the first side is shorter than the length of the second side. The first side becomes an end side at the one side of the coil end disposed at the inner peripheral side of the stator core. The second side becomes an end side at the other side of the coil end disposed at the outer peripheral side of the stator core. This ensures easily forming the coil end at one side disposed at the inner peripheral side of the stator core shorter than the coil end at the other side disposed at the outer peripheral side of the stator core using the short first side. This ensures easily forming the coil bent to the inner peripheral side. Therewith, bending the coil end at the other side to the outer peripheral side ensures easily forming an asymmetric coil of different bending directions.

A coil according to a second aspect is a coil wound around a slot of a stator core, included a wound member for manufacturing a coil according to the first aspect, wherein an end side at the one side of the coil end disposed at the inner peripheral side of the stator core is configured with the first side, the end side being configured by bending a part of the first-side side of the wound member for manufacturing a coil to the inner peripheral side of the stator core, and an end side at the other side of the coil end disposed at the outer peripheral side of the stator core is configured with the second side, the end side being configured by bending a part of the second-side side of the wound member for manufacturing a coil to the outer peripheral side of the stator core or not bending the part.

In a manufacturing a coil according to the second aspect, as described above, the length of the first side is shorter than the length of the second side. The first side becomes an end side at the one side of the coil end disposed at the inner peripheral side of the stator core. The second side becomes an end side at the other side of the coil end disposed at the outer peripheral side of the stator core. This ensures easily forming the coil end at one side disposed at the inner peripheral side of the stator core shorter than the coil end at the other side disposed at the outer peripheral side of the stator core using the short first side. This ensures easily forming the coil bent to the inner peripheral side. Therewith, bending the coil end at the other side to the outer peripheral side ensures easily forming an asymmetric coil of different bending directions.

A rotating electrical machine according to a third aspect includes a stator core and the coil according to the second aspect. The coil is wound around a slot of the stator core.

In a rotating electrical machine manufacturing a coil according to the third aspect, as described above, the length of the first side is shorter than the length of the second side. The first side becomes an end side at the one side of the coil end disposed at the inner peripheral side of the stator core. The second side becomes an end side at the other side of the coil end disposed at the outer peripheral side of the stator core. This ensures easily forming the coil end at one side disposed at the inner peripheral side of the stator core shorter than the coil end at the other side disposed at the outer peripheral side of the stator core using the short first side. This ensures easily forming the coil bent to the inner peripheral side. Therewith, bending the coil end at the other side to the outer peripheral side ensures easily forming an asymmetric coil of different bending directions.

A method for manufacturing a coil according to a fourth aspect is a method for manufacturing a coil wound around a slot of a stator core. The method includes: preparing a wound member for manufacturing a coil including a first side, a second side, a third side, and a fourth side, the first side and the second side being opposite one another, the third side and the fourth side respectively coupling the first side and the second side, the first side having a length shorter than a length of the second side; forming an end side at one side of a coil end disposed at an inner peripheral side of the stator core with the first side, the end side being formed by bending a part of the first-side side of the wound member for manufacturing a coil to an inner peripheral side of the stator core; and forming an end side at another side of a coil end disposed at an outer peripheral side of the stator core with the second side, the end side being formed by bending a part of the second-side side of the wound member for manufacturing a coil to an outer peripheral side of the stator core or not bending the part.

A method for manufacturing a coil according to the fourth aspect, as described above, includes: forming an end side at the one side of the coil end disposed at the inner peripheral side of the stator core with the first side having a length shorter than a length of the second side; and forming an end side at the other side of the coil end disposed at the outer peripheral side of the stator core with the second side. This ensures easily forming the coil end at one side disposed at the inner peripheral side of the stator core shorter than the coil end at the other side disposed at the outer peripheral side of the stator core using the short first side. This ensures easily forming the coil bent to the inner peripheral side. Therewith, bending the coil end at the other side to the outer peripheral side ensures easily forming an asymmetric coil of different bending directions.

According to the wound member for manufacturing a coil, the coil, the rotating electrical machine, and the method for manufacturing a coil, a coil bent to the inner peripheral side, and an asymmetric coil of different bending directions can be easily formed.

Hereinafter, a description will be given of this embodiment based on the drawings.

### (First Embodiment)

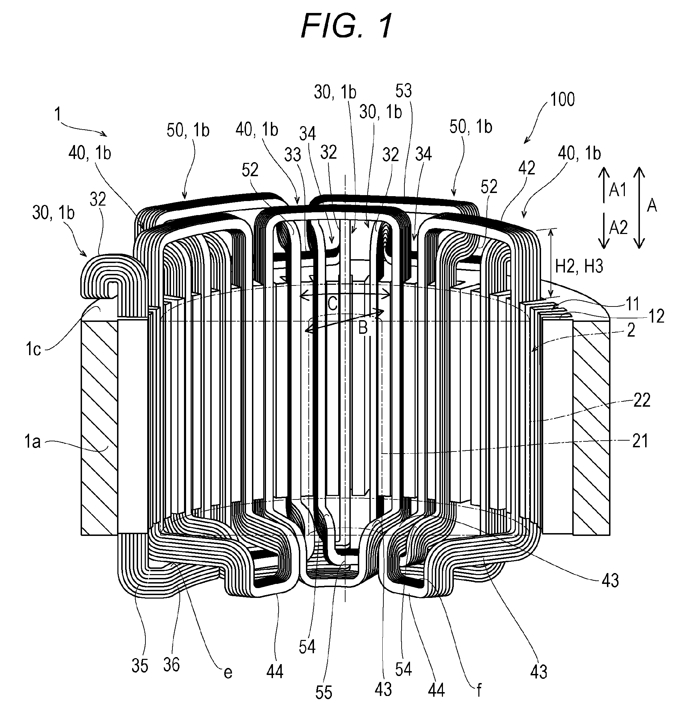

First, a description will be given of a constitution of an electric motor 100 according to the first embodiment with reference to Fig. 1 to Fig. 6. The first embodiment describes the radial electric motor 100 as an exemplary rotating electrical machine.

As illustrated in Fig. 1, the electric motor 100 includes a stator 1, which is a stating unit, and a rotor 2, which is a rotating unit (see the one dot chain line). The rotor 2 includes a shaft 21 (see the one dot chain line), a rotor core 22 (see the one dot chain line), and a plurality of permanent magnets (not illustrated). The rotor 2 is rotatable around the shaft 21.

The stator 1 includes a stator core 1a and a plurality of coils 1b. The stator core 1a includes a plurality of slots 11. The plurality of coils 1b is mounted to the respective slots 11. The stator core 1a is formed in a cylindrical shape. The stator core 1a includes a plurality of teeth 12 that extend to inside in a radial direction B at the inner peripheral side of the stator core 1a. The teeth 12 are equiangularly spaced along a circumferential direction C of the stator core 1a. The slots 11 are disposed between these teeth 12.

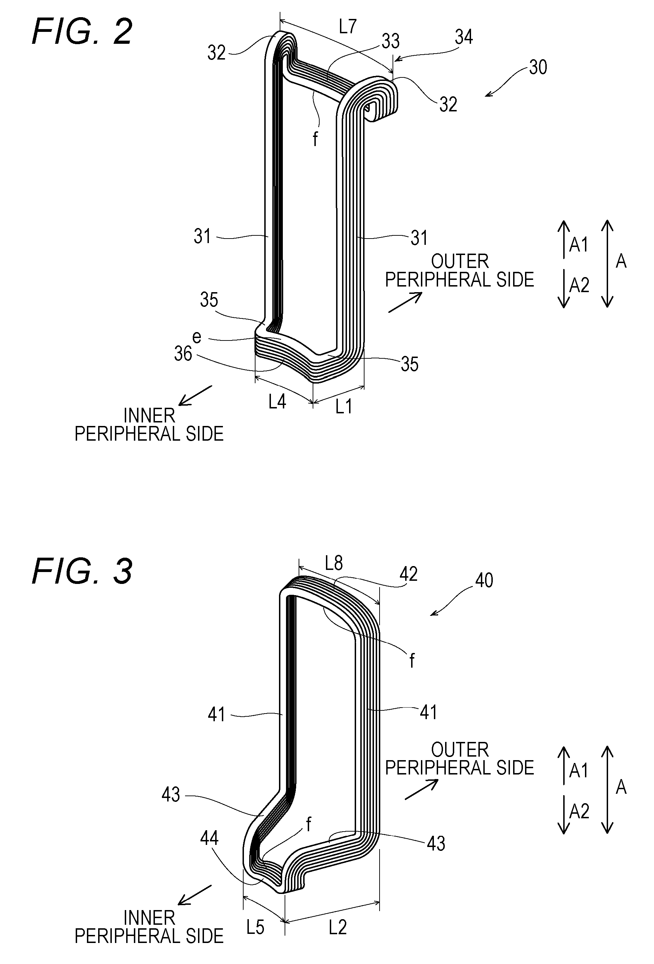

The electric motor 100 is a three-phase AC current rotating electrical machine. In the electric motor 100, three-phase coils are mounted to the respective slots 11 by concentric winding among distributed winding. For example, the electric motor 100 includes the rotating electrical machine with eight poles and 48 slots. This rotating electrical machine has the number of slots q : q = 2 (= 48/(3 x 8)) in every pole and every phase. The plurality of coils 1b include three types of coils: a U-phase coil 30, a V-phase coil 40, and a W-phase coil 50 corresponding to each phase of the three-phase AC current. As illustrated in Fig. 2 to Fig. 4, the U-phase coil 30, the V-phase coil 40, and the W-phase coil 50 have shapes different from one another. The detail of the shape of each coil will be described later. The U-phase coil 30, the V-phase coil 40, and the W-phase coil 50 are exemplary "coils."

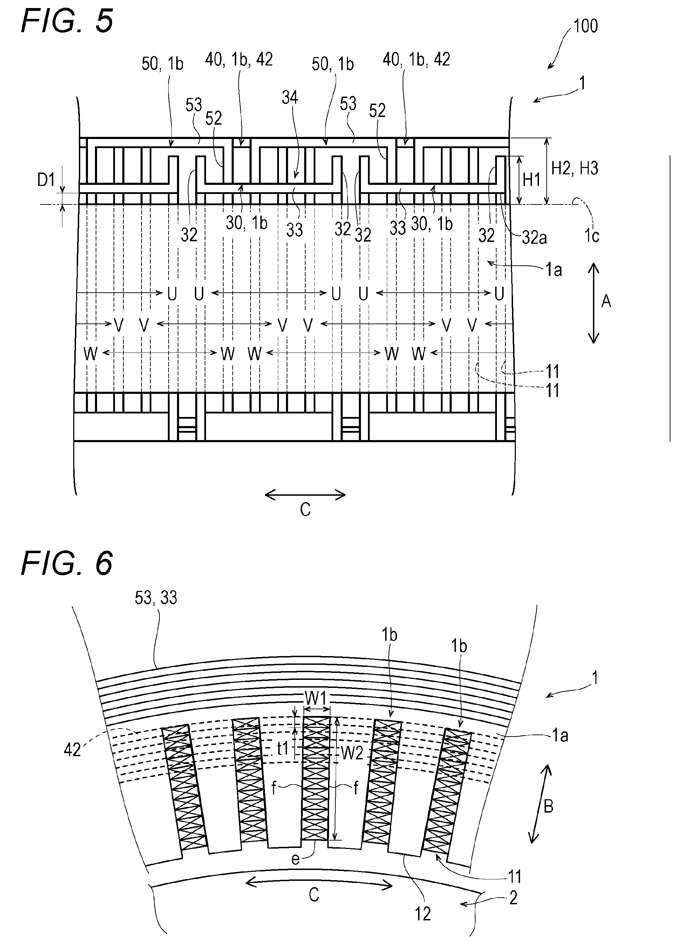

An exemplary coil arrangement in concentric winding is illustrated in Fig. 5. One coil 1b occupies the two different slots 11 spaced from each other (four slots in Fig. 5). One side of the adjacent two coils 1b in different phases are each disposed in the slot 11 between the coils 1b. In view of this, each coil 1b includes two slots for each of the U-phase coil 30, the V-phase coil 40, and the W-phase coil 50 in the order from the right side in Fig. 5.

As illustrated in Fig. 6, each coil 1b is a flat strip-shaped edgewise coil around which a flat conductive wire is wrapped and laminated. Specifically, the flat conductive wire has an approximately rectangular cross section with width W1 and thickness t1 (W1 > t1) in cross section. The flat conductive wires are laminated in the slot 11 in one row in a thickness direction. Thus, the coil 1b includes a laminated surface f and an end face e in the laminated direction. The laminated surface f is formed by lamination of the flat conductive wire. Lamination width W2 of the laminated surface f is approximately equal to the thickness t1 of flat conductive wire x the number of laminations. The width of the end face e (thickness of the coil 1b) is approximately equal to the width W1 of the flat conductive wire. As illustrated in Fig. 1, the coils 1b inside of the slots 11 each have coil ends. The coil ends are parts projecting (exposed) from both ends in an axial direction A of the stator core 1a (the slot 11) to the axial direction.

Next, coils in each phase will be specifically described. In the following description, the axial direction A of the cylindrical-shaped stator core 1a is denoted as an "axial direction." The radial direction B of the stator core 1a is denoted as a "radial direction." The circumferential direction C of the stator core 1a is denoted as a "circumferential direction."

As illustrated in Fig. 1 and Fig. 2, the U-phase coil 30 includes a pair of coil sides 31, a pair of bent portions 32, and a coupler 33. The pair of coil sides 31 is inserted into the respective different slots 11. The pair of bent portions 32 is disposed at the other side of the coil end in the axial direction of the stator core 1a (A1 direction side). The pair of bent portions 32 is continuous from the pair of coil sides 31. The coupler 33 couples the pair of bent portions 32.

The pair of bent portions 32 has the same shape. Specifically, as illustrated in Fig. 1, the bent portion 32 is formed as follows. The coil sides 31 projecting from the slot 11 in the axial direction are bent back to the outside in the radial direction at the coil end. Additionally, tip faces of the bent portions 32 are bent back to an end face 1c at the axial direction of the stator core 1a (hereinafter denoted as the core end face 1c) side (see Fig. 1). That is, the bent portion 32 is formed by bending back the coil sides 31, which project from the slots 11 in the axial direction, to the outside in the radial direction in an approximately U shape at the coil ends (see Fig. 1). As illustrated in Fig. 5, projection height of the bent portion 32 from the core end face 1c (maximum height) is H1. As illustrated in Fig. 5, the bent portion 32 is formed as follows. A tip face 32a of the bent portion 32 faces the stator core 1a at a position of a distance D1 (D1 < H1). The distance D1 is a position at the proximity of the core end face 1c of the stator core 1a.

As illustrated in Fig. 1 and Fig. 2, the coupler 33 extends along the circumferential direction of the stator core 1a. For example, the coupler 33 extends in an arc shape along the circumferential direction of the stator core 1a. The coupler 33 couples the tips of the bent portions 32 near the core end face 1c. The coupler 33 is disposed such that the laminated surface f of the edgewise coil faces the core end face 1c and is approximately parallel to the core end face 1c. The coil end of the U-phase coil 30 forms a concave portion 34 viewed from the radial direction. The concave portion 34 includes the pair of bent portions 32 and the coupler 33. The concave portion 34 is open to the outside in the axial direction. As illustrated in Fig. 1 and Fig. 5, at the inside of the concave portion 34, a part of a coil end of different coil (the W-phase coil 50) is disposed.

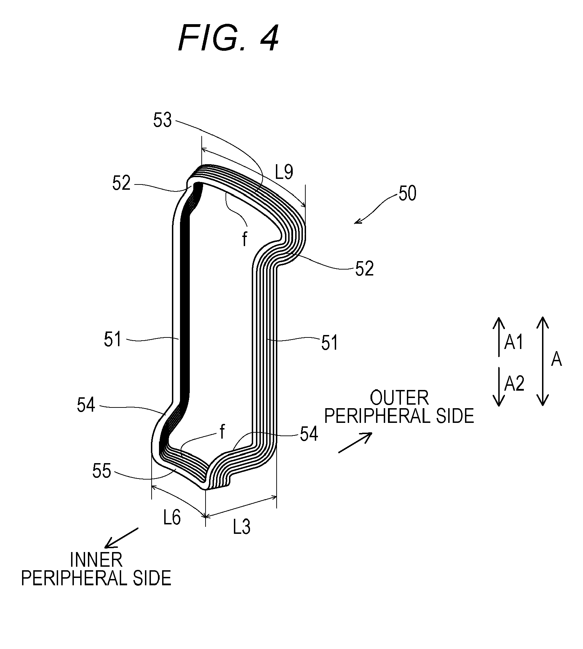

As illustrated in Fig. 2, the U-phase coil 30 includes a pair of bent portions 35 and a coupler 36 at one side of the coil end in the axial direction of the stator core 1a (A2 direction side). The pair of bent portions 35 is bent in an approximately L shape to the inside in the radial direction. The coupler 36 couples among the pair of bent portions 35. The U-phase coil 30 is bent to the radial direction of the stator core 1a along the direction that the flat conductive wire is laminated. The U-phase coil 30 is bent to have a different shape from the V-phase coil 40 and the W-phase coil 50. The U-phase coil 30 (the coupler 36) is bent to the inside in the radial direction at the coil end at one side in the axial direction of the stator core 1a (the A2 direction side). Moreover, the U-phase coil 30 can be inserted to the slot 11 from the coil end side at one side in the axial direction of the stator core 1a (the A2 direction) along the axial direction of the stator core 1a. An amount of projection L1 of the bent portion 35 to the inside in the radial direction of the stator core 1a is the smallest compared with an amount of projection L2 of the bent portion 43 of the V-phase coil 40 to the inside in the radial direction (see Fig. 3) and an amount of projection L3 of the bent portion 54 of the W-phase coil 50 to the inside in the radial direction (see Fig. 4). The amount of projection is referred to as length of the end of the bent portion 35 from the outside to the inside in the radial direction. The V-phase coil 40 and the W-phase coil 50 will be described later.

The coupler 36 extends along the circumferential direction of the stator core 1a. For example, the coupler 36 extends in an arc shape along the circumferential direction of the stator core 1a. Length L4 of the coupler 36 in the circumferential direction is the longest compared with length L5 of the coupler 44 of the V-phase coil 40 in the circumferential direction (see Fig. 3) and length L6 of the coupler 55 of the W-phase coil 50 in the circumferential direction (see Fig. 4). The coupler 36 is disposed such that the end face e of the edgewise coil faces the axial direction and opposes the end face in the axial direction of the rotor 2.

As illustrated in Fig. 1 and Fig. 3, the V-phase coil 40 includes a coupler 42 at the other side of the coil end (the A1 direction side). The coupler 42 directly couples tips of a pair of coil sides 41 projecting from the slots 11 in the axial direction at the other side of the coil end. The coupler 42 is formed extending along the circumferential direction of the stator core 1a over the bent portion 32 of the U-phase coil 30 and the bent portion 52 of the W-phase coil 50, which will be described later. For example, the coupler 42 extends in an arc shape along the circumferential direction of the stator core 1a. The coupler 42 is disposed such that the laminated surface f of the edgewise coil faces the axial direction and opposes the end face in the axial direction of the rotor 2. Projection height of the coupler 42 from the core end face 1c is H2 (see Fig. 5).

The V-phase coil 40 includes a pair of bent portions 43 and a coupler 44 at one side of the coil end (the A2 direction side). The coupler 44 couples the tips of the pair of bent portions 43. The pair of bent portions 43 has an approximately S shape. The V-phase coil 40 is bent to the radial direction of the stator core 1a along the direction that the flat conductive wire is laminated. The V-phase coil 40 is bent so as to have a different shape from the U-phase coil 30 and the W-phase coil 50. The V-phase coil 40 is bent to the inside in the radial direction at the coil end at one side in the axial direction of the stator core 1a (the A2 direction side). Moreover, the V-phase coil 40 can be inserted to the slot 11 from the coil end side at one side in the axial direction of the stator core 1a (the A2 direction side) along the axial direction of the stator core 1a.
The amount of projection L2 of the bent portion 43 to the inside in the radial direction of the stator core 1a is the largest compared with the amount of projection L1 of the bent portion 35 of the U-phase coil 30 to the inside in the radial direction (see Fig. 2) and the amount of projection L3 of the bent portion 54 of the W-phase coil 50 to the inside in the radial direction (see Fig. 4). The W-phase coil 50 will be described later. The bent portion 43 passes through the inside in the axial direction of the coupler 36 of the U-phase coil 30 without contacting the coupler 36. Therewith, the bent portion 43 passes through the inside in the axial direction of the bent portion 54 of the W-phase coil 50 without contacting the coupler 55 (see Fig. 4).

The length L5 of the coupler 44 in the circumferential direction is the shortest compared with the length L4 of the coupler 36 of the U-phase coil 30 in the circumferential direction (see Fig. 2) and the length L6 of the coupler 55 of the W-phase coil 50 in the circumferential direction (see Fig. 4). The coupler 44 is disposed such that the laminated surface f of the edgewise coil faces the axial direction and opposes the end face in the axial direction of the rotor 2.

As illustrated in Fig. 1 and Fig. 4, the W-phase coil 50 includes a pair of bent portions 52 and a coupler 53. The coupler 53 couples the pair of bent portions 52. The pair of bent portions 52 is continuous from a pair of coil sides 51 at the other side of the coil end (the A1 direction side). The pair of bent portions 52 is bent in an approximately S shape to the outside in the radial direction. The bent portion 52 is disposed such that the tip face of the bent portion 52 faces the opposite side from the core end face 1c (outside in the axial direction). The bent portion 52 is disposed in the concave portion 34 of the U-phase coil 30. The coupler 53 extends along the circumferential direction of the stator core 1a. For example, the coupler 53 extends in an arc shape along the circumferential direction of the stator core 1a. The coupler 53 is disposed so as to overlap the coupler 33 of the U-phase coil 30 in the axial direction. The coupler 53 is disposed such that the laminated surface f of the edgewise coil faces the axial direction and opposes the end face in the axial direction of the rotor 2. Projection height of the coupler 53 from the core end face 1c is H3 (see Fig. 5). In the first embodiment, H3 = H2 is met. Accordingly, at the other side of the coil end, the coupler 53 of the W-phase coil 50 and the coupler 42 of the V-phase coil 40 are disposed so as to be arranged along the radial direction (see Fig. 1).

The W-phase coil 50 includes a pair of bent portions 54 and a coupler 55. The coupler 55 couples the pair of bent portions 54. The pair of bent portions 54 is bent in an approximately S shape to the inside in the radial direction at one side of the coil end (the A2 direction side). The W-phase coil 50 is bent to the radial direction of the stator core 1a along the direction that the flat conductive wire is laminated. The W-phase coil 50 is bent to have a different shape from the U-phase coil 30 and V-phase coil 40. The W-phase coil 50 is bent to the inside in the radial direction at the coil end at one side in the axial direction of the stator core 1a (the A2 direction side). Moreover, the W-phase coil 50 can be inserted to the slot 11 from the coil end side at one side in the axial direction of the stator core 1a (the A2 direction side) along the axial direction of the stator core 1a.

The amount of projection L3 of the bent portion 54 to the inside in the radial direction of the stator core 1a is larger than the amount of projection L1 of the bent portion 35 of the U-phase coil 30 to the inside in the radial direction (see Fig. 2). Further, the amount of projection L3 of the bent portion 54 to the inside in the radial direction of the stator core 1a is smaller than the amount of projection L2 of the bent portion 43 of the V-phase coil 40 to the inside in the radial direction (see Fig. 3). That is, as illustrated in Fig. 1, viewing from the axial direction, the coupler 36 of the U-phase coil 30, the coupler 55 of the W-phase coil 50, and the coupler 44 of the V-phase coil 40 are disposed in this order from the outside to the inside in the radial direction.

The bent portion 54 passes through the inside in the axial direction of the coupler 36 of the U-phase coil 30 without contacting the coupler 36. As illustrated in Fig. 1, the U-phase coil 30, the V-phase coil 40, and the W-phase coil 50 do not contact but are intersect with one another at the coil ends at one side in the axial direction of the stator core 1a. That is, the U-phase coil 30, the V-phase coil 40, and the W-phase coil 50 are spaced at predetermined intervals.

The coupler 55 extends along the circumferential direction. The length L6 of the coupler 55 in the circumferential direction is shorter than the length L4 of the coupler 36 of the U-phase coil 30 in the circumferential direction (see Fig. 2). Further, the length L6 of the coupler 55 in the circumferential direction is longer than the length L5 of the coupler 44 of the V-phase coil 40 in the circumferential direction (see Fig. 3). The coupler 55 is disposed such that the laminated surface f of the edgewise coil faces the axial direction and opposes the end face in the axial direction of the rotor 2.

Thus, the U-phase coil 30, the V-phase coil 40, and the W-phase coil 50 are bent to the inside in the radial direction of the stator core 1a at the coil ends at one side in the axial direction of the stator core 1a. Furthermore, the coil end at the other side of the V-phase coil 40 extends along the axial direction of the stator core 1a. On the other hand, the U-phase coil 30 and the W-phase coil 50 are bent to the outside in the radial direction of the stator core 1a.

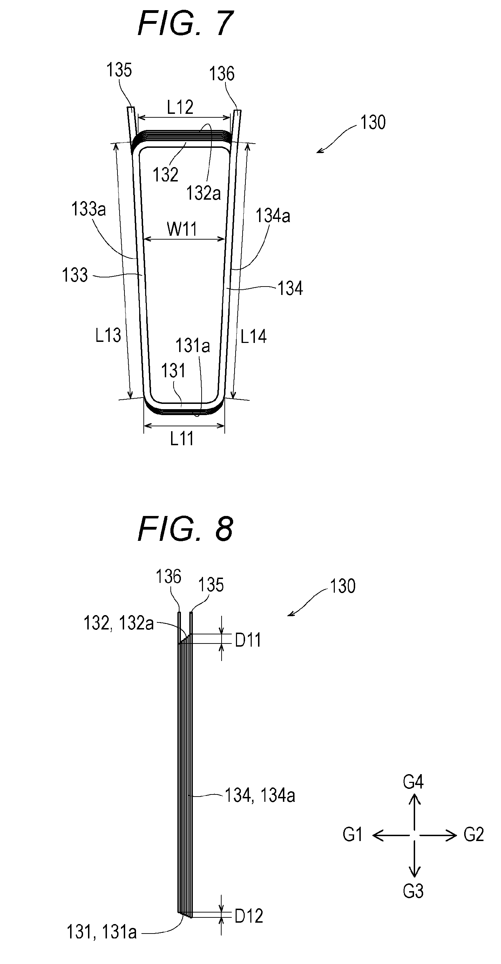

Next, with reference to Fig. 7 to Fig. 12, structures of wound members for manufacturing coils 130, 140, and 150 for manufacturing the U-phase coil 30, the V-phase coil 40, and the W-phase coil 50 will be described.

As illustrated in Fig. 7 to Fig. 12, in the first embodiment, the wound members for manufacturing coils 130, 140, and 150 are strip-shaped edgewise coils around which the flat conductive wires are wrapped and laminated. Each U-phase coil 30, V-phase coil 40, and W-phase coil 50 is a coil for distributed winding to be distributed to and wound around a plurality of the slots 11. That is, the wound members for manufacturing coils 130, 140, and 150 are wound members for manufacturing coils to manufacture the U-phase coil 30, the V-phase coil 40, and the W-phase coil 50 for distributed winding.

As illustrated in Fig. 7, the wound member for manufacturing a coil 130, which is for manufacturing the U-phase coil 30, has a first side 131, a second side 132, a third side 133, and a fourth side 134. The first side 131 and the second side 132 oppose one another. The third side 133 and the fourth side 134 couple the first side 131 and the second side 132, respectively. The first side 131, the second side 132, the third side 133, and the fourth side 134 constitute an inverted approximately trapezoidal shape. Four corner portions of the wound member for manufacturing a coil 130 of the inverted approximately trapezoidal shape have an arc shape. Here, in the first embodiment, the part at the first side 131 side of the wound member for manufacturing a coil 130 is bent to the inner peripheral side of the stator core 1a. That is, the first side 131 becomes an end side of the coil end at one side disposed at the inner peripheral side of the stator core 1a (the coupler 36, see Fig. 2) (the side to be the end side). A part at the second side 132 side of the wound member for manufacturing a coil 130 is bent to the outer peripheral side of the stator core 1a. That is, the second side 132 becomes an end side of the coil end at the other side (the coupler 33, see Fig. 2) (the side to be the end side). Length L11 of the first side 131 is shorter than length L12 of the second side 132. That is, the first side 131 corresponds to a lower bottom of the wound member for manufacturing a coil 130 of the inverted approximately trapezoidal shape, and the second side 132 corresponds to an upper bottom of the wound member for manufacturing a coil 130 of the inverted approximately trapezoidal shape. The length L11 of the first side 131 corresponds to the length L4 in the circumferential direction of the coupler 36 of the U-phase coil 30 after completion, which is illustrated in Fig. 2. The length L12 of the second side 132 corresponds to length L7 in the circumferential direction of the coupler 33 of the U-phase coil 30 after completion.

As illustrated in Fig. 7 and Fig. 8, the wound member for manufacturing a coil 130 includes a side end 131a, which is at the outer peripheral side of the first side 131, and a side end 132a, which is at the outer peripheral side of the second side 132. The flat conductive wire is wrapped such that the side end 131a and the side end 132a are shifted to the outer peripheral side. That is, as illustrated in Fig. 8, the wound member for manufacturing a coil 130 is formed in a taper shape tapered off to the inner peripheral side of the stator core 1a viewed from the lateral side (the G1 direction side). Parts of the first side 131 side and the second side 132 side of the wound member for manufacturing a coil 130 are bent to constitute the end sides of the coil ends. Afterward, the flat conductive wire is wrapped such that the side ends at the outer peripheral side of the first side 131 and the second side 132 (the laminated surface f of the coupler 36 and the laminated surface f of the coupler 33, see Fig. 2) may be approximately a flat surface. That is, the flat conductive wire is wrapped such that the side end 131a, which is at the outer peripheral side of the first side 131, and the side end 132a, which is at the outer peripheral side of the second side 132, are shifted to the outer peripheral side. Specifically, as illustrated in Fig. 8, a shifting amount D11 of the side end 132a at the outer peripheral side of the second side 132 is approximately twice as much as a shifting amount D12 of the side end 131 a of the outer peripheral side of the first side 131.

In the first embodiment, as illustrated in Fig. 7, an interval W11 between the third side 133 and the fourth side 134 gradually decreases. Specifically, the interval W11 between the third side 133 and the fourth side 134 gradually decreases from the side coupled to the second side 132 to the side coupled to the first side 131. The flat conductive wire is wrapped such that each of a side end 133a, which is at the outer peripheral side (and the inner peripheral side) of the third side 133, and a side end 134a, which is at the outer peripheral side (and the inner peripheral side) of the fourth side 134, may form an approximately flat surface. Length L13 of the third side 133 and length L14 of the fourth side 134 are approximately equal. The flat conductive wires of ends 135 and 136 project from the outer peripheral side of the second side 132 to the outside.

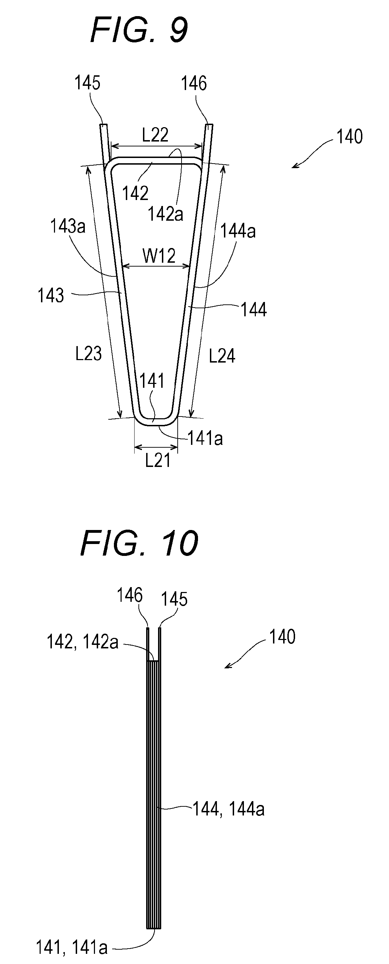

As illustrated in Fig. 9, the wound member for manufacturing a coil 140, which is for manufacturing the V-phase coil 40, has a first side 141, a second side 142, a third side 143, and a fourth side 144. The first side 141 and the second side 142 oppose one another. The third side 143 and the fourth side 144 couple the first side 141 and the second side 142, respectively. The first side 141, the second side 142, the third side 143, and the fourth side 144 constitute an inverted approximately trapezoidal shape. Four corner portions of the wound member for manufacturing a coil 140 of the inverted approximately trapezoidal shape have an arc shape. Here, in the first embodiment, the part at the first side 141 side of the wound member for manufacturing a coil 140 is bent to the inner peripheral side of the stator core 1a. That is, the first side 141 becomes an end side of the coil end at one side disposed at the inner peripheral side of the stator core 1a (the coupler 44, see Fig. 3) (the side to be the end side). A part at the second side 142 side of the wound member for manufacturing a coil 140 is not bent to the outer peripheral side of the stator core 1a. That is, the second side 142 becomes an end side of the coil end at the other side (the coupler 42, see Fig. 3) (the side to be the end side). Length L21 of the first side 141 is shorter than length L22 of the second side 142. That is, the first side 141 corresponds to a lower bottom of the wound member for manufacturing a coil 140 of the inverted approximately trapezoidal shape, and the second side 142 corresponds to an upper bottom of the wound member for manufacturing a coil 140 of the inverted approximately trapezoidal shape. The length L21 of the first side 141 corresponds to the length L5 in the circumferential direction of the coupler 44 of the V-phase coil 40 after completion, which is illustrated in Fig. 3. The length L22 of the second side 142 corresponds to length L8 in the circumferential direction of the coupler 42 of the V-phase coil 40 after completion.

In the first embodiment, as illustrated in Fig. 9 and Fig. 10, the wound member for manufacturing a coil 140 includes a side end 141a, which is at the outer peripheral side (and the inner peripheral side) of the first side 141, and a side end 142a, which is at the outer peripheral side (and the inner peripheral side) of the second side 142. The flat conductive wire is wrapped such that each of the side end 141a and the side end 142a forms an approximately flat surface.

In the first embodiment, as illustrated in Fig. 9, an interval W12 between the third side 143 and the fourth side 144 gradually decreases. Specifically, the interval W12 between the third side 143 and the fourth side 144 gradually decreases from the side coupled to the second side 142 to the side coupled to the first side 141. The flat conductive wire is wrapped such that each of a side end 143a, which is at the outer peripheral side (and the inner peripheral side) of the third side 143, and a side end 144a, which is at the outer peripheral side (and the inner peripheral side) of the fourth side 144, may form an approximately flat surface. Length L23 of the third side 143 and length L24 of the fourth side 144 are approximately equal. The flat conductive wires of ends 145 and 146 project from the outer peripheral side of the second side 142 to the outside.

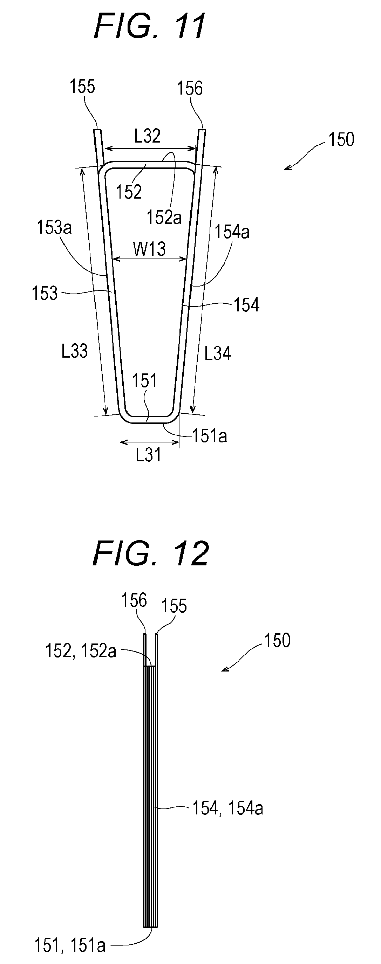

As illustrated in Fig. 11, the wound member for manufacturing a coil 150, which is for manufacturing the W-phase coil 50, has a first side 151, a second side 152, a third side 153, and a fourth side 154. The first side 151 and the second side 152 oppose one another. The third side 153 and the fourth side 154 couple the first side 151 and the second side 152, respectively. The first side 151, the second side 152, the third side 153, and the fourth side 154 constitute an inverted approximately trapezoidal shape. Four corner portions of the wound member for manufacturing a coil 150 of the inverted approximately trapezoidal shape have an arc shape. Here, in the first embodiment, the part at the first side 151 side of the wound member for manufacturing a coil 150 is bent to the inner peripheral side of the stator core 1a. That is, the first side 151 becomes an end side of the coil end at one side disposed at the inner peripheral side of the stator core 1a (the coupler 55, see Fig. 4) (the side to be the end side). A part at the second side 152 side of the wound member for manufacturing a coil 150 is bent to the outer peripheral side of the stator core 1a. That is, the second side 152 becomes an end side of the coil end at the other side (the coupler 53, see Fig. 4) (the side to be the end side). Length L31 of the first side 151 is shorter than length L32 of the second side 152. That is, the first side 151 corresponds to a lower bottom of the wound member for manufacturing a coil 150 of the inverted approximately trapezoidal shape, and the second side 152 corresponds to an upper bottom of the wound member for manufacturing a coil 150 of the inverted approximately trapezoidal shape. The length L31 of the first side 151 corresponds to the length L6 in the circumferential direction of the coupler 55 of the W-phase coil 50 after completion, which is illustrated in Fig. 4. The length L32 of the second side 152 corresponds to length L9 in the circumferential direction of the coupler 53 of the W-phase coil 50 after completion.

The length L11 of the first side 131 of the wound member for manufacturing a coil 130, the length L21 of the first side 141 of the wound member for manufacturing a coil 140, and the length L31 of the first side 151 of the wound member for manufacturing a coil 150 have the relationship of L11 > L31 > L21.

In the first embodiment, as illustrated in Fig. 11 and Fig. 12, the wound member for manufacturing a coil 150 includes a side end 151a, which is at the outer peripheral side (and the inner peripheral side) of the first side 151, and a side end 152a, which is at the outer peripheral side (and the inner peripheral side) of the second side 152. The flat conductive wire is wrapped such that each of the side end 151a and the side end 152a form an approximately flat surface.

In the first embodiment, as illustrated in Fig. 11, an interval W13 between the third side 153 and the fourth side 154 gradually decreases. Specifically, the interval W13 between the third side 153 and the fourth side 154 gradually decreases from the side coupled to the second side 152 to the side coupled to the first side 151. The flat conductive wire is wrapped such that each of a side end 153a, which is at the outer peripheral side (and the inner peripheral side) of the third side 153, and a side end 154a, which is at the outer peripheral side (and the inner peripheral side) of the fourth side 154, may form an approximately flat surface. Length L33 of the third side 153 and length L34 of the fourth side 154 are approximately equal. The flat conductive wires of ends 155 and 156 project from the outer peripheral side of the second side 152 to the outside.

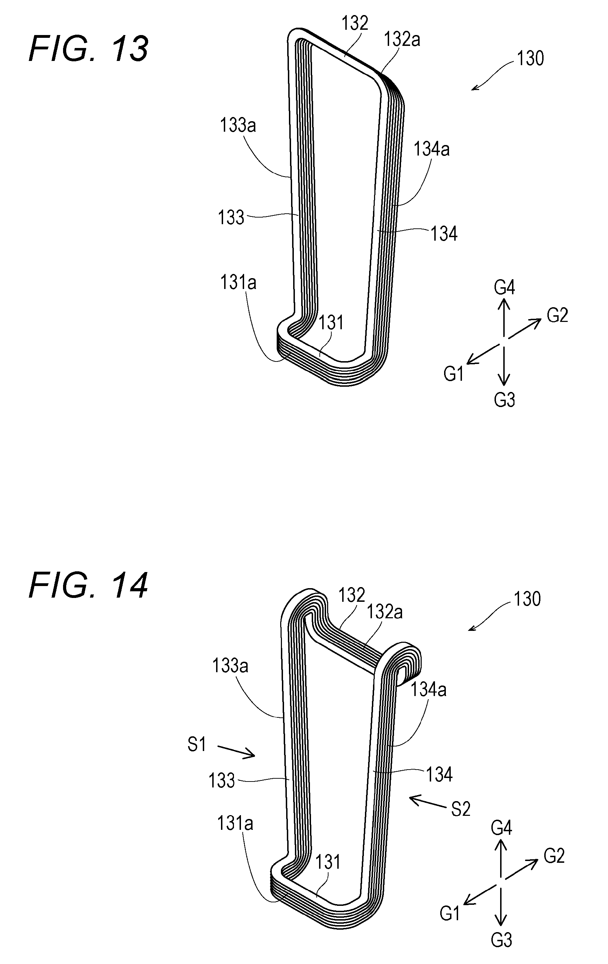

Next, a method for manufacturing the U-phase coil 30 will be described with reference to Fig. 2, Fig. 7, Fig. 13, and Fig. 14. In Fig. 13 and Fig. 14, the flat conductive wires of the ends 135 and 136 are omitted.

First, as illustrated in Fig. 7, in the first embodiment, the wound member for manufacturing a coil 130 is prepared. The wound member for manufacturing a coil 130 has the first side 131, the second side 132, the third side 133, and the fourth side 134. The first side 131 and the second side 132 oppose one another. The third side 133 and the fourth side 134 couple the first side 131 and the second side 132, respectively. Next, as illustrated in Fig. 13, the part of the first side 131 side of the wound member for manufacturing a coil 130 is bent once to the inner peripheral side of the stator core 1a (the G1 direction side) (approximately 90 degrees). Thus, the first side 131 forms the end side of the coil end at one side disposed at the inner peripheral side of the stator core 1a (the coupler 36, see Fig. 2). At this time, the shifted side end 131a at the outer peripheral side of the first side 131 (see Fig. 8) becomes an approximately flat surface (the laminated surface f of the coupler 36). As a result, the third side 133 and the fourth side 134 form the bent portion 35. Furthermore, the first side 131 forms the coupler 36.

Next, as illustrated in Fig. 14, the part of the second side 132 side of the wound member for manufacturing a coil 130 is bent multiple times (for example, twice) to the outer peripheral side of the stator core 1a (the G2 direction side) in the same direction (the direction bent from the inner peripheral side to downward at the outer peripheral side). Thus, the second side 132 forms the end side of the coil end at the other side disposed at the outer peripheral side of the stator core 1a (the coupler 33, see Fig. 2). Specifically, the parts of the third side 133 and the fourth side 134 at the second side 132 side are bent to the outer peripheral side of the stator core 1a (the G2 direction) at approximately 90 degrees. At this time, the side end 132a at the outer peripheral side of the second side 132 does not form an approximately flat surface, remaining shifted (not illustrated). Furthermore, the parts of the third side 133 and the fourth side 134 at the second side 132 side are bent to the outer peripheral side of the stator core 1a (the G3 direction) at approximately 90 degrees. Accordingly, the shifted side end 132a at the outer peripheral side of the second side 132 (see Fig. 8 and Fig. 13) forms an approximately flat surface from the shifted state (the laminated surface f of the coupler 33). As a result, the third side 133 and the fourth side 134 form the bent portion 32. Furthermore, the second side 132 forms the coupler 33.

Then, the first side 131 and the second side 132 are pressed from the lateral sides of the first side 131 and the second side 132 (a S1 direction and a S2 direction). This curves the first side 131 and the second side 132 to be a convex shape to the outer peripheral side of the stator core 1a (the G2 direction). In view of this, as illustrated in Fig. 2, the couplers 33 and 36 are formed to a shape curved along the circumferential direction. Therewith, the third side 133 and the fourth side 134 (the pair of coil sides 31) are arranged approximately parallel (along the axial direction A). As a result, the pair of coil sides 31 are disposed to go along the shape of the slot 11 viewed from the axial direction, that is, to gradually expand the distance between the pair of coil sides 31 with each other from the inner peripheral side to the outer peripheral side.

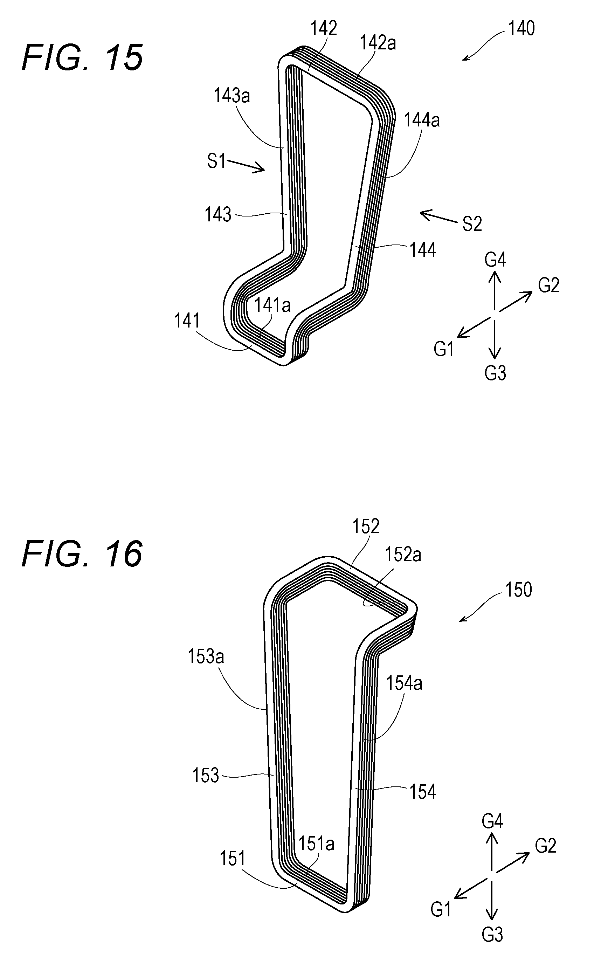

Next, a method for manufacturing the V-phase coil 40 will be described with reference to Fig. 3, Fig. 9, and Fig. 15. In Fig. 15, the flat conductive wires of the ends 145 and 146 are omitted.

First, as illustrated in Fig. 9, the wound member for manufacturing a coil 140 is prepared. The wound member for manufacturing a coil 140 has the first side 141, the second side 142, the third side 143, and the fourth side 144. The first side 141 and the second side 142 oppose one another. The third side 143 and the fourth side 144 couple the first side 141 and the second side 142, respectively. Next, as illustrated in Fig. 15, the part of the first side 141 side of the wound member for manufacturing a coil 140 is bent even times (for example, twice) to the inner peripheral side of the stator core 1a in different directions. Thus, the first side 141 forms the end side of the coil end at one side disposed at the inner peripheral side of the stator core 1a (the coupler 44). Specifically, the parts of the third side 143 and the fourth side 144 at the first side 141 side are bent to the G1 direction at approximately 90 degrees. At this time, the side end 141a at the outer peripheral side of the first side 141 does not form an approximately flat surface, remaining shifted (not illustrated). Furthermore, the parts of the first side 141 side of the third side 143 and the fourth side 144 are bent in the G3 direction at approximately 90 degrees. Accordingly, the side end 141a at the outer peripheral side of the first side 141 is formed to an approximately flat surface from the shifted state (the laminated surface f of the coupler 44, see Fig. 3). As a result, the third side 143 and the fourth side 144 form the bent portion 43. Furthermore, the first side 141 forms the coupler 44. The third side 143 and the fourth side 144 at the second side 142 side are not bent.

Then, the first side 141 and the second side 142 are pressed from the lateral sides of the first side 141 and the second side 142 (the S1 direction and the S2 direction). This curves the first side 141 and the second side 142 to be a convex shape to the outer peripheral side of the stator core 1a (the G2 direction). In view of this, as illustrated in Fig. 3, the couplers 42 and 44 are formed to a shape curved along the circumferential direction. Therewith, the third side 143 and the fourth side 144 (the pair of coil sides 41) are arranged approximately parallel (along the axial direction A) as illustrated in Fig. 3. As a result, the pair of coil sides 41 are disposed to go along the shape of the slot 11 viewed from the axial direction, that is, to gradually expand the distance between the pair of coil sides 41 with each other from the inner peripheral side to the outer peripheral side.

Next, a method for manufacturing the W-phase coil 50 will be described with reference to Fig. 4, Fig. 11, and Fig. 16 to Fig. 18. In Fig. 16 to Fig. 18, the flat conductive wires of the ends 155 and 156 are omitted.

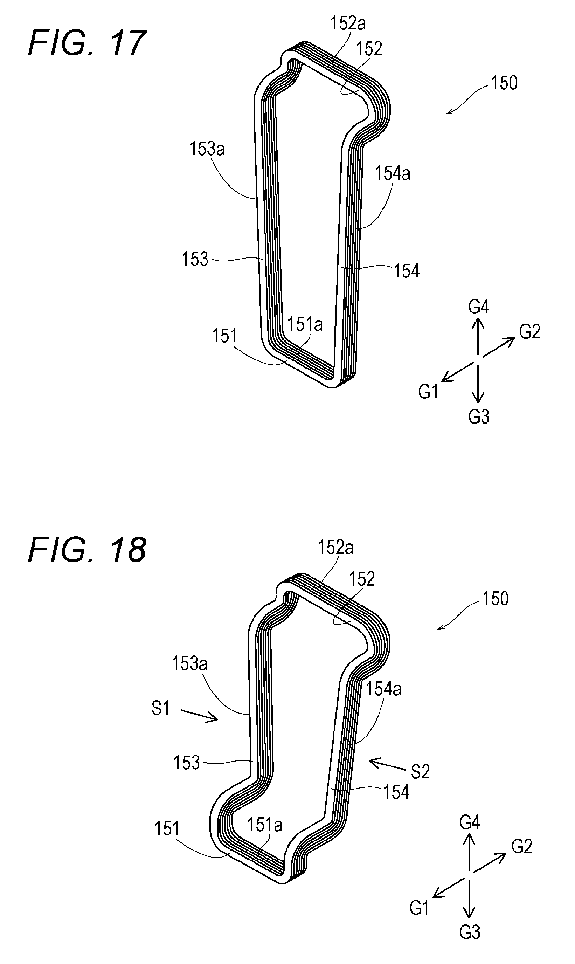

First, as illustrated in Fig. 11, the wound member for manufacturing a coil 150 is prepared. The wound member for manufacturing a coil 150 has the first side 151, the second side 152, the third side 153, and the fourth side 154. The first side 151 and the second side 152 oppose one another. The third side 153 and the fourth side 154 couple the first side 151 and the second side 152, respectively. Next, as illustrated in Fig. 16 and Fig. 17, the part of the second side 152 side of the wound member for manufacturing a coil 150 is bent even times (for example, twice) to the outer peripheral side of the stator core 1a (the G2 direction side) in different directions. Thus, the second side 152 forms the end side of the coil end at the other side disposed at the outer peripheral side of the stator core 1a (the coupler 53, see Fig. 4). Specifically, as illustrated in Fig. 16, the parts of the third side 153 and the fourth side 154 at the second side 152 side are bent to the G2 direction at approximately 90 degrees. At this time, the side end 152a at the outer peripheral side of the second side 152 does not form an approximately flat surface, remaining shifted. Furthermore, as illustrated in Fig. 17, the parts of the third side 153 and the fourth side 154 at the second side 152 side are bent in the G4 direction at approximately 90 degrees. Accordingly, the side end 151a at the outer peripheral side of the first side 151 is formed to an approximately flat surface from the shifted state (the laminated surface f of the coupler 53, see Fig. 4). As a result, the third side 153 and the fourth side 154 form the bent portion 52. Furthermore, the second side 152 forms the coupler 53.

Next, as illustrated in Fig. 18, the part of the first side 151 side of the wound member for manufacturing a coil 150 is bent even times (for example, twice) to the inner peripheral side of the stator core 1a (the G1 direction side) in different directions. Thus, the first side 151 forms the end side of the coil end at one side disposed at the inner peripheral side of the stator core 1a (the coupler 55). Specifically, the parts of the third side 153 and the fourth side 154 at the first side 151 side are bent to the G1 direction at approximately 90 degrees. At this time, the side end 151a at the outer peripheral side of the first side 151 does not form an approximately flat surface, remaining shifted (not illustrated). Furthermore, the parts of the third side 153 and the fourth side 154 at the first side 151 side are bent in the G3 direction at approximately 90 degrees. Accordingly, the side end 151a at the outer peripheral side of the first side 151 is formed to an approximately flat surface from the shifted state (the laminated surface f of the coupler 55, see Fig. 4). As a result, the third side 153 and the fourth side 154 form the bent portion 54. Furthermore, the first side 151 forms the coupler 55.

Then, the first side 151 and the second side 152 are pressed from the lateral sides of the first side 151 and the second side 152 (the S1 direction and the S2 direction). This curves the first side 151 and the second side 152 to be a convex shape to the outer peripheral side of the stator core 1a (the G2 direction). In view of this, as illustrated in Fig. 4, the couplers 53 and 55 are formed to a shape curved along the circumferential direction. Therewith, the third side 153 and the fourth side 154 (the pair of coil sides 51) are arranged approximately parallel (along the axial direction A). As a result, the pair of coil sides 51 are disposed to go along the shape of the slot 11 viewed from the axial direction, that is, to gradually expand the distance between the pair of coil sides 51 with each other from the inner peripheral side to the outer peripheral side.

In the first embodiment, as described above, the length of the first side 131 (141, 151) is configured shorter than the length of the second side 132 (142, 152). The first side 131 (141, 151) becomes the end side of the coil end at one side disposed at the inner peripheral side of the stator core 1a (the side to be the end side). The second side 132 (142, 152) becomes an end side of the coil end at the other side disposed at the outer peripheral side of the stator core 1a (the side to be the end side). This easily forms the coil end at one side disposed at the inner peripheral side of the stator core 1a shorter than the coil end at the other side disposed at the outer peripheral side of the stator core 1a with the short first side 131 (141, 151). This easily forms the U-phase coil 30 (the V-phase coil 40 and the W-phase coil 50) bent to the inner peripheral side. Therewith, bending the coil end at the other side to the outer peripheral side allows easily forming the asymmetric coil (the W-phase coil 50) of different bending directions.

In the first embodiment, as described above, the wound member for manufacturing a coil 130 (140, 150) is a strip-shaped edgewise coil around which the flat conductive wire is wrapped and laminated. At this time, the length of the first side 131 (141, 151) is configured shorter than the length of the second side 132 (142, 152). This constitutes the U-phase coil 30 (the V-phase coil 40 and the W-phase coil 50) with the edgewise coil. In view of this, the U-phase coil 30 (the V-phase coil 40 and the W-phase coil 50) can be disposed such that the slots 11 are formed with less gaps (a ratio of volume occupied by the slots 11 is increased). As a result, characteristics of the electric motor 100 (for example, torque) can be enhanced.

In the first embodiment, as described above, the wound member for manufacturing a coil 130 (140, 150) is employed for manufacturing the U-phase coil 30 (the V-phase coil 40 and the W-phase coil 50) for distributed winding to be distributed to and wound around a plurality of the slots 11. In the wound member for manufacturing a coil 130 (140, 150), the length of the first side 131 (141, 151) is configured shorter than the length of the second side 132 (142, 152). This configures the U-phase coil 30 (the V-phase coil 40 and the W-phase coil 50) in distributed winding. This allows bringing a form of magnetic field generated by the U-phase coil 30 (the V-phase coil 40 and the W-phase coil 50) close to a form of sine wave. Consequently, the characteristics of the electric motor 100 (for example, torque) can be enhanced in addition to reduction in torque pulsation.

In the first embodiment, as described above, the part of the first side 141 (151) side of the wound member for manufacturing a coil 140 (150) is bent even times to the inner peripheral side of the stator core 1a in different directions. This configures the first side 141 (151) to the end side of the coil end at one side. Bending the wound member for manufacturing a coil 140 (150) to the outer peripheral side of the stator core 1a even times in different directions or not bending the wound member for manufacturing a coil 140 (150) configures the second side 142 (152) as the end side of the coil end at the other side. Accordingly, even if the flat conductive wires are wrapped such that the side end 141a (151a) at the outer peripheral side of the first side 141 (151) and the side end 142a (152a) at the outer peripheral side of the second side 142 (152) are formed to be respective approximately flat surfaces, the side end 141a (151a) at the outer peripheral side of the first side 141 (151) and the side end 142a (152a) at the outer peripheral side of the second side 142 (152) can be formed to be respective approximately flat surfaces after manufacturing the V-phase coil 40 (the W-phase coil 50).

In the first embodiment, as described above, bending the wound member for manufacturing a coil 140 (150) even times in different directions configures the first side 141 (151) and the second side 142 (152) as the end sides of the coil ends. The flat conductive wires are wrapped such that the side end 141a (151a) at the outer peripheral side of the first side 141 (151) and the side end 142a (152a) at the outer peripheral side of the second side 142 (152) are formed to be respective approximately flat surfaces. Accordingly, wrapping the flat conductive wires ensures easily forming the wound member for manufacturing a coil 140 (150). This differs from the case where the side end 141a (151a) at the outer peripheral side of the first side 141 (151) and the side end 142a (152a) at the outer peripheral side of the second side 142 (152) are formed shifted to the outer peripheral side (or the inner peripheral side).

In the first embodiment, as described above, the interval between the third side 133 (143, 153) and the fourth side 134 (144, 154) gradually decreases. This allows easily coupling the second side 132 (142, 152) to the first side 131 (141, 151), which is shorter than the second side 132 (142, 152), with the third side 133 (143, 153) and the fourth side 134 (144, 154).

In the first embodiment, as described above, the first side 131 (141, 151), the second side 132 (142, 152), the third side 133 (143, 153), and the fourth side 134 (144, 154) constitute an inverted approximately trapezoidal shape. Furthermore, the length of the first side 131 (141, 151), which is the lower bottom of the inverted approximately trapezoidal shape, is shorter than the length of the second side 132 (142, 152), which is the upper bottom of the inverted approximately trapezoidal shape. Accordingly, bending the wound member for manufacturing a coil 130 (140, 150) of the inverted approximately trapezoidal shape to the inner peripheral side and the outer peripheral side ensures easily forming the couplers 33, 42, and 53, which are longer in the direction along the circumferential direction, with the second side 132 (142, 152). Therewith, the couplers 36, 44, and 55, which are shorter in the direction along the circumferential direction, can be easily formed with the first side 131 (141, 151).

### (Second Embodiment)

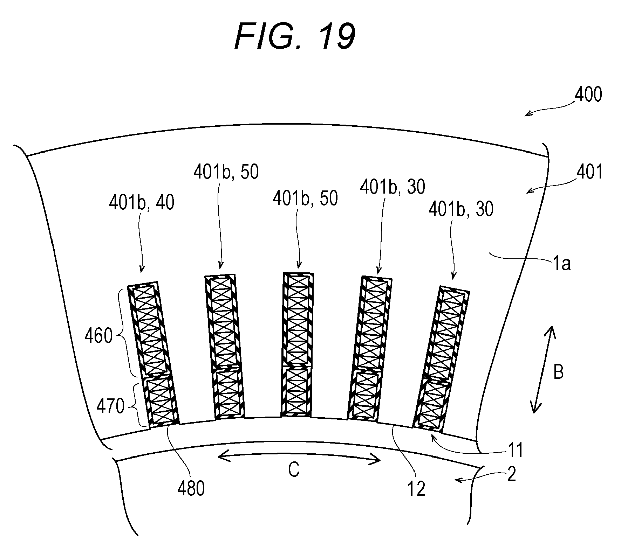

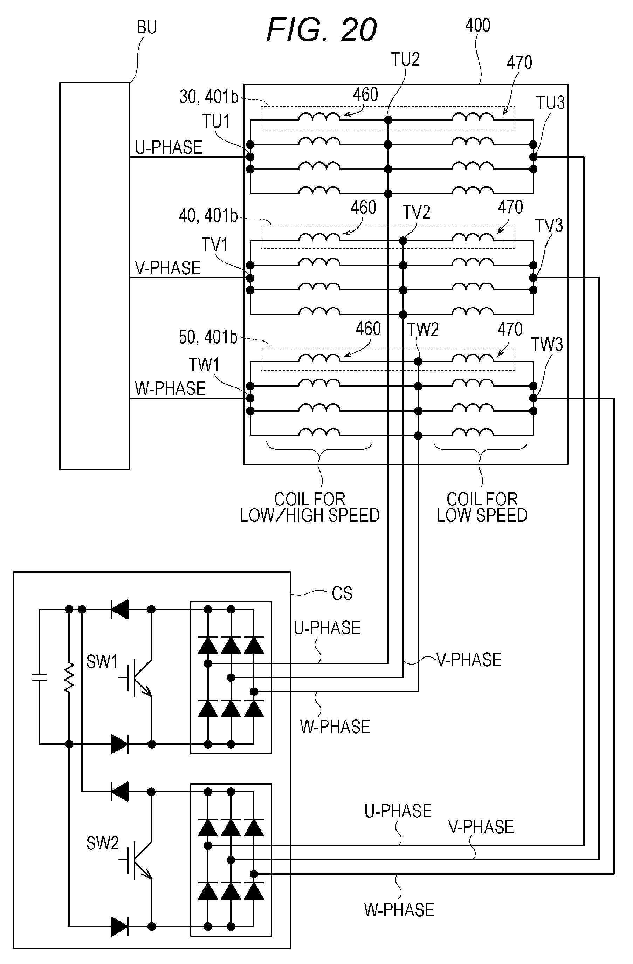

Next, a description will be given of a constitution of an electric motor 400 with the second embodiment with reference to Fig. 19 and Fig. 20. The second embodiment describes an example of disposing a coil for low/high speed and a coil for low speed as coils in each phase of the first embodiment. The configuration of coupling the electric motor 400 and the coil is one example of a "rotating electrical machine."

As illustrated in Fig. 19 and Fig.20, a stator 401 according to the second embodiment includes coils 401b. The coils 401b include the U-phase coils 30, the V-phase coils 40, and the W-phase coils 50. The coils 401b each include a coil for low/high speed 460 and a coil for low speed 470. The coil for low/high speed 460 and the coil for low speed 470 are coupled in series (two in a series). Four of the coils for low/high speed 460 and the coils for low speed 470, which are coupled in series, are coupled in parallel in each phase. Specifically, in the coil 401b, a part of the laminated flat conductive wire configures the coil for low/high speed 460. The other part of flat conductive wire configures the coil for low speed 470. These coils for low/high speed 460 and coils for low speed 470 are isolated from one another with an insulating member 480. Accordingly, the coil 401b includes the coil for low/high speed 460 and the coil for low speed 470 such that the coil for low/high speed 460 and the coil for low speed 470 are disposed in the same slot 11.

The coil for low/high speed 460 of the coil 401b is used for both in low-speed driving and high-speed driving of the electric motor 400. The coil for low speed 470 of the coil 401b is used in low-speed driving of the electric motor 400. A coupling state of these coils for low/high speed 460 and coil for low speed 470 can be switched with a coil switcher CS as illustrated in Fig. 20.

Specifically, the electric motor 400 is coupled to a power supply BU and the coil switcher CS. The electric motor 400 is driven corresponding to a three-phase AC power supplied from the power supply BU.

The coil for low/high speed 460 and the coil for low speed 470 of each coil 401b are electrically coupled in series. Terminals TU1, TV1, and TW1 at one side of the coils for low/high speed 460 are coupled to the power supply BU. Terminals TU2, TV2, and TW2 at the other side of the coils for low/high speed 460 and at one side of the coils for low speed 470 are coupled to the coil switcher CS. Terminals TU3, TV3, and TW3 at the other side of the coils for low speed 470 are coupled to the coil switcher CS.

The coil switcher CS includes a switch for high speed SW1 and a switch for low speed SW2. The switch for high speed SW1 short-circuits the terminals TU2, TV2, and TW2 of the electric motor 400. The switch for low speed SW2 short-circuits the terminals TU3, TV3, and TW3 of the electric motor 400.

The coil switcher CS turns off the switch for high speed SW1 while turning on the switch for low speed SW2 in low speed driving. Consequently, the terminals TU3, TV3, and TW3 short-circuit. Then, a voltage is applied to both the coil for low/high speed 460 and the coil for low speed 470 in the coil 401b in each phase of the electric motor 400. This increases impedance of the coils 401b in each phase. Accordingly, a larger voltage can be applied to the coil 401b. As a result, torque of the electric motor 400 in low speed driving can be increased.

The coil switcher CS turns on the switch for high speed SW1 while turning off the switch for low speed SW2 in high speed driving. Consequently, the terminals TU2, TV2, and TW2 short-circuit. Then, a voltage is applied to the coil for low/high speed 460 in the coil 401b in each phase of the electric motor 400. This decreases impedance of the coils 401b in each phase compared with the impedance in low speed driving. As a result, the electric motor 400 can be driven at high speed.

Other configurations of the second embodiment are similar to those of the first embodiment.

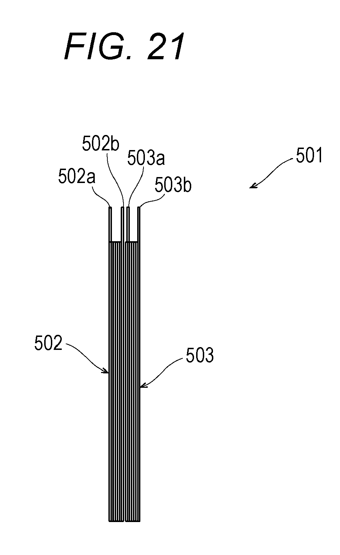

Next, with reference to Fig. 21, a structure of a wound member for manufacturing a coil 501 for manufacturing the coil 401b including the coil for low/high speed 460 and the coil for low speed 470 will be described.

As illustrated in Fig. 21, the wound member for manufacturing a coil 501 includes a wound member for manufacturing a coil for low/high speed 502 and a wound member for manufacturing a coil for low speed 503. In the wound member for manufacturing a coil 501, the flat wire is wrapped such that the wound member for manufacturing a coil for low/high speed 502 and the wound member for manufacturing a coil for low speed 503 are superimposed. Ends 502a and 502b of the wound member for manufacturing a coil for low/high speed 502 project from the outer peripheral side of the wound member for manufacturing a coil for low/high speed 502 to the outside. Ends 503a and 503b of the wound member for manufacturing a coil for low speed 503 project from the outer peripheral side of the wound member for manufacturing a coil for low speed 503 to the outside. The coil 401b is formed by the wound member for manufacturing a coil 501 by a manufacturing method similar to the manufacturing method for the U-phase coil 30, the V-phase coil 40, and the W-phase coil 50 of the first embodiment.

Therefore, the above-disclosed embodiments are all considered as illustrative and not restrictive. The scope of the disclosure is indicated by the appended claims rather than by the foregoing description. All variations falling within the equivalency range of the appended claims are intended to be embraced therein.

For example, the first and the second embodiments employ an electric motor as an example of a rotating electrical machine. However, the rotating electrical machine of this disclosure may be a rotating electrical machine other than the electric motor such as a generator.

In the examples shown in the first and the second embodiments, edgewise coils around which the flat conductive wires are wrapped and laminated are employed. However, the coil of this disclosure may be a coil formed by bundling round wires.

In the example shown in the first embodiment, the coil with the shape illustrated in Fig. 2 is configured as the U-phase coil, the coil with the shape illustrated in Fig. 3 as the V-phase coil, and the coil with the shape illustrated in Fig. 4 as the W-phase coil. However, the coil with the shape illustrated in Fig. 2 may be configured as the V-phase coil, the coil with the shape illustrated in Fig. 3 as the W-phase coil, and the coil with the shape illustrated in Fig. 4 as the U-phase coil. That is, it is only necessary that the coils with the same shape be in the same phase.

In the examples shown in the first and the second embodiments, the wound member for manufacturing a coil has an inverted approximately trapezoidal shape. However, the wound member for manufacturing a coil may have a shape other than the inverted approximately trapezoidal shape insofar as the length of the first side is shorter than the length of the second side.

In the examples shown in the first and the second embodiments, the V-phase coil and the W-phase coil are formed by bending the wound member for manufacturing a coil twice to the inner peripheral side in different directions, and bending the wound member for manufacturing a coil twice to the outer peripheral side in different directions or not bending the wound member for manufacturing a coil. However, the V-phase coil and the W-phase coil may be formed by bending the wound member for manufacturing a coil even times of equal to or more than four times to the inner peripheral side and the outer peripheral side in different directions.

In the examples shown in the first and the second embodiments, the wound member for manufacturing a coil includes the strip-shaped edgewise coils around which the flat conductive wires are wrapped and laminated. However, to reduce the state of the flat conductive wires being wrapped to be released, for example, the flat conductive wire at each side of the wound member for manufacturing a coil may be bundled with a tape-shaped member. Alternatively, the flat conductive wires may be bonded by applying an adhesive material between the flat conductive wires.

In the example shown in the first embodiment, the first side is configured as the end side at one side of the coil end by bending the part of the first-side side of the wound member for manufacturing a coil twice to the inner peripheral side of the stator core in different directions. On the other hand, the second side is configured as the end side at the other side of the coil end by bending the wound member for manufacturing a coil twice to the outer peripheral side of the stator core in different directions (the W-phase coil 50) or not bending the wound member for manufacturing a coil (the V-phase coil 40). However, the number of bending of the wound member for manufacturing a coil (the shape of the coil end) is not limited to this. For example, bending the part of the first-side side of the wound member for manufacturing a coil once to the inner peripheral side of the stator core may configure the first side as the end side of the coil end at one side. Then, bending the wound member for manufacturing a coil once to the outer peripheral side of the stator core or not bending the wound member for manufacturing a coil may configure the second side as the end side at the other side of the coil end.

In the example shown in the first embodiment, the projection height H2 of the coupler 42 of V-phase coil 40 from the core end face 1c is approximately equal to the projection height H3 of the coupler 53 of the W-phase coil 50 from the core end face 1c (H2 = H3). However, the projection height of the coupler from the core end face 1c is not limited to this. For example, the projection height H3 of the coupler 53 of the W-phase coil 50 from the core end face 1c may be shorter than the projection height H2 of the coupler 42 of V-phase coil 40 from the core end face 1c (H3 < H2). Alternatively, the projection height H3 of the coupler 53 of the W-phase coil 50 from the core end face 1c may be taller than the projection height H2 of the coupler 42 of V-phase coil 40 from the core end face 1c (H3 > H2).

In the example shown in the second embodiment, the coil for low/high speed and the coil for low speed are coupled in series (two in a series). Furthermore, four of the coils for low/high speed and the coils for low speed, which are coupled in series, are coupled in parallel in each phase. However, the number of coils coupled in series may be other than two, and the number of coils coupled in series of other than four may be coupled in parallel.

The wound member for manufacturing a coil, the coil, the rotating electrical machine, and the method for manufacturing a coil of this disclosure may be the following first to eighth wound members for manufacturing a coil, the first coil, the first rotating electrical machine, and the first method for manufacturing a coil.

The first wound member for manufacturing a coil is for manufacturing a coil wound around a slot of a stator core. The wound member for manufacturing a coil includes a first side and a second side mutually, and a third side and a fourth side which couple to the first side and the second side. The first side is to be an end side at one side of a coil end disposed at an inner peripheral side of the stator core by bending a part of the first-side side of the wound member for manufacturing a coil to the inner peripheral side of the stator core. The second side is to be an end side at another side of a coil end disposed at the outer peripheral side of the stator core by bending a part of the second-side side of the wound member for manufacturing a coil to the outer peripheral side of the stator core or not bending the part. The first side has a length shorter than a length of the second side.

In the first wound member for manufacturing a coil, the second wound member for manufacturing a coil is configured as follows. A strip-shaped edgewise coil is configured by wrapping and laminating a flat conductive wire such that the length of the first side is shorter than the length of the second side.

In the first or the second wound member for manufacturing a coil, the third wound member for manufacturing a coil is configured as follows. A length of the first side for manufacturing a coil for distributed winding to be distributed and wound around a plurality of the slots is configured smaller than a length of the second side.

In any of the first to the third wound members for manufacturing a coil, the fourth wound member for manufacturing a coil is configured as follows. The first side is to be the end side at the one side of the coil end disposed at the inner peripheral side of the stator core by bending a part of the first-side side of the wound member for manufacturing a coil even times to the inner peripheral side of the stator core in different directions. The second side is to be the end side at the other side of the coil end disposed at the outer peripheral side of the stator core by bending a part of the second-side side of the wound member for manufacturing a coil even times to the outer peripheral side of the stator core in different directions or not bending the part.

In the fourth wound member for manufacturing a coil, the fifth wound member for manufacturing a coil is configured as follows. The wound member for manufacturing a coil is a strip-shaped edgewise coil configured by wrapping and laminating a flat conductive wire. The flat conductive wire is wrapped such that the first side and the second side are to be the end sides of coil ends by bending the wound member for manufacturing a coil even times in different directions and side ends of the first side and the second side at an outer peripheral side each forms an approximately flat surface.

In any of the first to the fifth wound members for manufacturing a coil, the sixth wound member for manufacturing a coil is configured as follows. An interval between the third side and the fourth side gradually decreases.

In any of the first to the sixth wound members for manufacturing a coil, the seventh wound member for manufacturing a coil is configured as follows. The first side, the second side, the third side, and the fourth side constitute an inverted approximately trapezoidal shape. The length of the first side is shorter than the length of the second side. The first side corresponds to a lower bottom positioned at a lower side of the inverted approximately trapezoidal shape. The second side corresponds to an upper bottom positioned at an upper side of the inverted approximately trapezoidal shape.

In any of the first to the seventh wound members for manufacturing a coil, the eighth wound member for manufacturing a coil is configured as follows. The first side is to be the end side at the one side of the coil end disposed at the inner peripheral side of the stator core by bending a part of the first-side side of the wound member for manufacturing a coil equal to or more than once to the inner peripheral side of the stator core. The second side is to be the end side at the other side of the coil end disposed at the outer peripheral side of the stator core by bending a part of the second-side side of the wound member for manufacturing a coil equal to or more than once to the outer peripheral side of the stator core or not bending the part.

The first coil is wound around a slot of a stator core. The first coil includes a first side and a second side mutually, and a third side and a fourth side which couple the first side and the second side. An end side at one side of a coil end disposed at an inner peripheral side of the stator core is configured with the first side. The end side is configured by bending a part of the first-side side of the wound member for manufacturing a coil where the first side has a length shorter than a length of the second side to the inner peripheral side of the stator core. An end side at another side of a coil end disposed at an outer peripheral side of the stator core is configured with the second side. The end side at an outer peripheral side of the stator core is configured by bending a part of the second-side side of the wound member for manufacturing a coil to the outer peripheral side of the stator core or not bending the part.

The first rotating electrical machine includes a stator core and a coil. The coil is wound around a slot of the stator core. The coil includes a first side and a second side mutually, and a third side and a fourth side which couple the first side and the second side. An end side at one side of a coil end disposed at an inner peripheral side of the stator core is configured with the first side. The end side is configured by bending a part of the first-side side of the wound member for manufacturing a coil to the inner peripheral side of the stator core. The wound member for manufacturing a coil includes the first side with a length configured shorter than a length of the second side. An end side at another side of a coil end disposed at an outer peripheral side of the stator core is configured with the second side. The end side is formed by bending a part of the second-side side of the wound member for manufacturing a coil to the outer peripheral side of the stator core or not bending the part.

The method for manufacturing the first coil is a method for manufacturing a coil wound around a slot of a stator core. The method includes preparing a wound member for manufacturing a coil, forming an end side at one side of a coil end, and forming an end side at another side of a coil end. The preparing prepares a wound member for manufacturing a coil that includes a first side and a second side mutually, and a third side and a fourth side which couple the first side and the second side. The first side has a length shorter than a length of the second side. The forming an end side at one side of a coil end forms an end side at one side of a coil end disposed at an inner peripheral side of the stator core with the first side. The end side is formed by bending a part of the first-side side of the wound member for manufacturing a coil to an inner peripheral side of the stator core. The forming an end side at another side of a coil end forms an end side at another side of a coil end disposed at an outer peripheral side of the stator core with the second side. The end side is formed by bending a part of the second-side side of the wound member for manufacturing a coil to the outer peripheral side of the stator core or not bending the part.

The foregoing detailed description has been presented for the purposes of illustration and description. Many modifications and variations are possible in light of the above teaching. It is not intended to be exhaustive or to limit the subject matter described herein to the precise form disclosed. Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims appended hereto.

## Claims

1. A wound member for manufacturing a coil (130, 140, 150) for manufacturing a coil (30, 40, 50) wound around a slot (11) of a stator core (1a), the wound member for manufacturing a coil, comprising:
a first side (131, 141, 151) to be an end side at one side of a coil end disposed at an inner peripheral side of the stator core;
a second side (132, 142, 152) disposed opposite to the first side, the second side being to be an end side at another side of a coil end disposed at an outer peripheral side of the stator core; and
a third side (133, 143, 153) and a fourth side (134, 144, 154) that respectively couple the first side and the second side, wherein
the first side has a length shorter than a length of the second side.

2. The wound member for manufacturing a coil according to claim 1, wherein
the first side becomes the end side at the one side of the coil end disposed at the inner peripheral side of the stator core by bending a part of the first-side side of the wound member for manufacturing a coil to the inner peripheral side of the stator core, and
the second side becomes the end side at the other side of the coil end disposed at the outer peripheral side of the stator core by bending a part of the second-side side of the wound member for manufacturing a coil to the outer peripheral side of the stator core or not bending the part.

3. The wound member for manufacturing a coil according to claim 1, wherein
a strip-shaped edgewise coil is configured by wrapping and laminating a flat conductive wire such that the length of the first side is shorter than the length of the second side.

4. The wound member for manufacturing a coil according to claim 1 or 2, wherein
the coil is a coil for distributed winding to be distributed to and wound around a plurality of the slots.

5. The wound member for manufacturing a coil according to any one of claims 1 to 3, wherein
the first side becomes the end side at the one side of the coil end disposed at the inner peripheral side of the stator core by bending a part of the first-side side of the wound member for manufacturing a coil even times to the inner peripheral side of the stator core in different directions, and
the second side becomes the end side at the other side of the coil end disposed at the outer peripheral side of the stator core by bending a part of the second-side side of the wound member for manufacturing a coil even times to the outer peripheral side of the stator core in different directions or not bending the part.

6. The wound member for manufacturing a coil according to claim 5, wherein
the wound member for manufacturing a coil is a strip-shaped edgewise coil configured by wrapping and laminating a flat conductive wire, and
the flat conductive wire is wrapped such that the first side and the second side become the end sides of the coil ends by bending the wound member for manufacturing a coil even times in different directions and side ends of the first side and the second side at the outer peripheral side each form an approximately flat surface.

7. The wound member for manufacturing a coil according to any one of claims 1 to 6, wherein
an interval between the third side and the fourth side gradually decreases.

8. The wound member for manufacturing a coil according to any one of claims 1 to 7, wherein
the first side, the second side, the third side, and the fourth side constitute an inverted approximately trapezoidal shape, and
the first side is shorter than the second side, the first side corresponding to a lower bottom of the inverted approximately trapezoidal shape, the second side corresponding to an upper bottom of the inverted approximately trapezoidal shape.

9. A coil (30, 40, 50) wound around a slot (11) of a stator core (1a), comprising
the wound member for manufacturing a coil according to any one of claims 1 to 8, wherein
an end side at the one side of the coil end disposed at the inner peripheral side of the stator core is configured with the first side, the end side being configured by bending a part of the first-side side of the wound member for manufacturing a coil to the inner peripheral side of the stator core, and
an end side at the other side of the coil end disposed at the outer peripheral side of the stator core is configured with the second side, the end side being configured by bending a part of the second-side side of the wound member for manufacturing a coil to the outer peripheral side of the stator core or not bending the part.

10. A rotating electrical machine, comprising:
a stator core (1a); and
the coil according to claim 9, the coil being wound around a slot (11) of the stator core.

11. A method for manufacturing a coil for manufacturing a coil (30, 40, 50) wound around a slot (11) of a stator core (1a), comprising:
preparing a wound member for manufacturing a coil including a first side (131, 141, 151), a second side (132, 142, 152), a third side (133, 143, 153), and a fourth side (134, 144, 154), the first side (131, 141, 151) and the second side (132, 142, 152) being opposite one another, the third side (133, 143, 153) and the fourth side (134, 144, 154) respectively coupling the first side and the second side, the first side having a length shorter than a length of the second side;
forming an end side at one side of a coil end disposed at an inner peripheral side of the stator core with the first side, the end side being formed by bending a part of the first-side side of the wound member for manufacturing a coil to an inner peripheral side of the stator core; and
forming an end side at another side of a coil end disposed at an outer peripheral side of the stator core with the second side, the end side being formed by bending a part of the second-side side of the wound member for manufacturing a coil to an outer peripheral side of the stator core or not bending the part.
